# EUROPÄISCHE PATENTSCHRIFT

(11) **EP 2 659 761 B1**
(45) Veröffentlichungstag und Bekanntmachung des Hinweises auf die Patenterteilung: **10.05.2017**
(21) Anmeldenummer: 13155019.6
(22) Anmeldetag: 13.02.2013
(51) Int. Cl.: A01D 90/04, A01F 15/10

(54) **Erntemaschine mit einer Schneidvorrichtung**
Harvesting machine with a cutting device
Moissonneuse dotée d'un dispositif de coupe

(30) Priorität: 03.05.2012 DE 102012008721
(43) Veröffentlichungstag der Anmeldung: 06.11.2013
(73) Patentinhaber: Usines CLAAS France S.A.S., 57140 Metz (FR)
(72) Erfinder: Birkhofer, Stefan, 78333 Stocknach (DE); Altmayer, Marc, 57320 Alging (FR)
(74) Vertreter: Belda, Stefan Johannes

(56) Entgegenhaltungen:
- DE-A1- 3 821 717
- DE-C1- 3 711 355
- DE-U1- 9 308 656
- US-A1- 2008 028 737

## Beschreibung

Die Erfindung betrifft eine Erntemaschine, insbesondere eine Ballenpresse oder einen Ladewagen mit einer Schneidvorrichtung für landwirtschaftliches Erntegut gemäß dem Oberbegriff des Anspruchs 1.

Landwirtschaftliche Ballenpressen oder Ladewagen sind oftmals mit einer Schneidvorrichtung - auch "Schneidwerk" genannt - für der Maschine zugeführtes Halm- und/oder Blattgut (im Folgenden vereinfacht: "Erntegut") ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Kanal der Ballenpresse, des Ladewagens oder sonstigen landwirtschaftlichen Maschine so angeordnet, dass das Erntegut auf eine in den Kanal hineinragende Anzahl feststehender Messer zu gefördert wird, um in Kontakt mit den Messerkanten geschnitten zu werden. Im Fall von Ballenpressen und Ladewagen wird die Förderung des Ernteguts im Wirkungsbereich der Messer insbesondere durch einen Rotor bewirkt, der sich um eine quer zur Gutstromrichtung liegende Achse dreht und in Axialrichtung mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen.

In Bezug auf den durchströmten Erntegutkanal weisen derartige Schneidvorrichtungen eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel und zur Ermöglichung einer Auswahl einer gewünschten Messeranzahl ist es üblich, die Messer derart beweglich gegenüber einem Messerträger der Schneidvorrichtung zu lagern, dass sich jedes Messer zwischen zumindest einer Betriebsposition und einer Außerbetriebsposition verstellen lässt. In der Betriebsposition befindet sich das Messer dabei in einer Stellung, in der es so in den Erntegutkanal hineinragt, dass vorbeiströmendes Erntegut in Zusammenwirkung mit dem Messer zerkleinert wird. In der Außerbetriebsposition befindet sich das Messer dagegen in einer Stellung, in der es aus dem Erntegutkanal weitestgehend zurückgezogen ist, das Erntegut also nicht schneidet. Zum individuellen Spannen und Halten der Messer in den verschiedenen Betriebs- bzw. Außerbetriebspositionen dient eine aufwendige Stellmechanik, die unter anderem den einzelnen Messern zugeordnete Spanneinheiten sowie eine gemeinsame Stelleinrichtung umfasst. Schon angesichts der großen Anzahl heute verbauter Messer in Schneidvorrichtungen fällt bei derartigen Schneidvorrichtungen ein hoher Aufwand beim verschleißbedingten Messerwechsel an. Der für den Messerwechsel erforderliche Zugang zu den dicht unterhalb des Erntegutkanals angeordneten Messern ist in der Praxis schwierig.

Aus dem Stand der Technik ist es beispielsweise bekannt sich zu Wartungs- und/oder Reparaturzwecken Zugänglichkeit zu den Messern zu verschaffen, indem der mit den Messern bestückte Messerträger einseitig aus der Erntemaschine herausziehbar gestaltet ist, um die Messer dann von der einen Maschinenseite tauschen zu können, siehe DE 9308656 U.

Nachteilig daran ist, dass aufgrund des Gewichts und der erforderlichen Auszuglänge des Messerträgers ein aufwendiger Aufbau des diesen tragenden Rahmens erforderlich ist. Zudem erfordert der voll ausgezogene Messerträger viel seitlichen Platz.

Es ist daher eine Aufgabe der vorliegenden Erfindung, eine mit einer Schneidvorrichtung ausgestattete Erntemaschine anzugeben, die bei geringem Platzbedarf und verhältnismäßig leichter Konstruktion einfachen Zugang zu den Messern gewährleistet, um diese auf bequeme Weise warten bzw. austauschen zu können.

Die genannte Aufgabe wird gelöst durch eine Erntemaschine mit den Merkmalen des Anspruchs 1. Diese zeichnet sich dadurch aus, dass der Messerträger in einer sich quer zum Erntegutkanal erstreckenden Richtung linear beweglich gelagert ist, so dass der Messerträger aus einer bezogen auf den Erntegutkanal mittigen Position beidseitig in jeweils davon seitliche Positionen bewegbar ist, in denen der Messerträger jeweils nur teilweise, jedoch zumindest zur Hälfte aus dem Kanal hinausragt. Erfindungsgemäß ist durch die beidseitig bewegbare Lagerung gewährleistet, dass der Messerträger beispielsweise zum Zweck der Wartung und/oder Reparatur einzelner Messer (oder zugehöriger Stellmechanik) durch Verschiebung nach rechts oder links der Erntemaschine vollständig aus dem unzugänglichen Einbaubereich unterhalb des Erntegutkanals herausbewegt werden kann. Durch eine Verschiebung nach rechts ragt dabei mehr als die Hälfte des rechten Teils des Messerträgers aus dem Kanal hervor, durch eine Verschiebung nach links ragt mehr als die Hälfte des linken Teils des Messerträgers aus dem Kanal hervor. In der mittigen Position befindet sich der Messerträger in einer bezogen auf den Erntegutkanal zentralen Stellung, die auch im Betrieb einzunehmen ist, um die volle Wirksamkeit der Schneideinrichtung zu erzielen. Die erfindungsgemäße Anordnung bietet den Vorteil, dass der Messerträger einteilig gefertigt sein kann, wobei durch die beidseitige, jeweils teilweise Ausziehbarkeit nur ein geringer seitlicher Platzbedarf beim Messerwechsel besteht und im ausgezogenen Zustand von einer - wie auch immer gestalteten - Haltestruktur keine übermäßig hohen Haltekräfte aufzubringen sind.

Gemäß einer vorteilhaften Weiterbildung der Erfindung wird der Messerträger von einem Tragrahmen gehalten, der um eine quer zum Erntegutkanal verlaufende Achse schwenkbar gegenüber dem Maschinenrahmen der Erntemaschine gelagert ist. Der Messerträger ist damit nicht nur seitlich verschiebbar, sondern mittels des schwenkbaren Tragrahmens in Bezug auf den Erntegutkanal verschwenkbar. Die Verschwenkbarkeit dient vorteilhaft dazu, den Messerträger aus einer den Erntegutkanal abschließenden Betriebsposition in eine Wartungsposition verbringen zu können, in welcher der Erntegutkanal zumindest teilweise geöffnet und damit zu Wartungs- bzw. Reparaturzwecken zugänglich ist. Weiterhin unterscheidet sich die Betriebsposition von der Wartungsposition vorzugsweise darin, dass in der Betriebsposition der Messerträger seitlich von den Wänden des Erntegutkanals in der Bewegung gehindert ist, während in der Wartungsposition der Messerträger aus seiner mittigen Position in seitliche Positionen bewegbar ist.

Vorteilhaft ist demnach der Tragrahmen mittels einer geeigneten Aktorik aus einem geschlossenen Zustand, in dem der Messerträger seitlich vom Erntegutkanal eingeschlossen ist, in einen geöffneten Zustand (Wartungsposition) verschwenkbar, in dem der Messerträger in seitliche Positionen bewegbar ist. Beispielsweise könnten hierzu paarweise zwischen dem Maschinenrahmen und dem Tragrahmen wirkende hydraulische Stellzylinder dienen. Auch andere Aktoren sind denkbar. Mit Hilfe der Aktorik ist jedenfalls gewährleistet, dass sich die Verstellung des Messerträgers zwischen der Betriebsposition und der Wartungsposition für einen Maschinenbediener ohne Kraftaufwand, beispielsweise ferngesteuert von einem Bedienterminal, durchführen lässt.

Für die Lagerung des Messerträgers kommen verschiedene Möglichkeiten in Betracht. Eine vorteilhafte Weiterbildung der Erfindung sieht vor, dass der Messerträger gegenüber dem Tragrahmen mittels linearer Führungsmittel schubladenartig gelagert ist. Der Messerträger ist in diesem Fall ähnlich einer Schublade gestaltet, d.h. als eine bauliche Einheit, die vom Tragrahmen verschiebbar gehalten wird. Am Tragrahmen sind dazu zweckmäßigerweise Führungsmittel vorgesehen, die mit dazu komplementären Führungsmitteln des Messerträgers zusammenwirken, um das beidseitige seitliche Ausschieben des Messerträgers zu ermöglichen.

Gemäß einer konstruktiv günstigen Ausgestaltung sind am Messerträger jeweils eine quer zum Erntegutkanal verlaufende vordere Schiene und eine quer zum Erntegutkanal verlaufende hintere Schiene angeordnet, die mittels am Tragrahmen angeordneter Lagerelemente auf einer quer zum Erntegutkanal verlaufenden Führungsbahn gehalten werden. Besonders vorteilhaft handelt es sich bei den Lagerelementen um mehrere über die Breite des Tragrahmens angeordnete Rollen, wobei die vordere Schiene und die hintere Schiene auch in den seitlichen Positionen des Messerträger auf zumindest zwei dieser Rollen aufliegen. Auf die genannte Weise ist demnach eine Rollenlagerung des Messerträgers geschaffen, wodurch sich eine besonders leichtgängige und reibungsarme Lagerung des Messerträgers ergibt. Da der Messerträger jeweils auf zumindest zwei Rollen aufliegt, ist in sämtlichen Positionen des Messerträgers eine sichere Lagerung gewährleistet.

Erfindungsgemäß ragt der Messerträger in den seitlichen Positionen jeweils zumindest zur Hälfte aus dem Erntegutkanal hinaus. Gemäß einer besonders platzsparenden und bedienfreundlichen Gestaltung ist die Lagerung so beschaffen, dass der Messerträger in den seitlichen Positionen zu etwa 60% (seiner eigenen Breite) aus dem Erntegutkanal hinausragt, da sich gezeigt hat, dass sich mit einer solchen Gestaltung auch bei verhältnismäßig leichtem Aufbau des tragenden Rahmens eine hinreichende Zugänglichkeit erzielen lässt.

Zweckmäßigerweise ist der Schneidvorrichtung ein den Erntegutkanal nach unten gegenüber dem Messerträger abdeckendes Gutleitelement zugeordnet, in dem eine Vielzahl schlitzartiger Ausnehmungen für die am Messerträger angeordneten Messer ausgebildet ist. Es handelt sich bei dem Gutleitelement insbesondere um ein Bodenblech, das den Erntegutkanal nach unten gegenüber dem Messerträger begrenzt, um unter anderem den Messerträger vor Verschmutzungen durch Erntegut zu schützen.

Gemäß einer bevorzugten Weiterbildung der Erntemaschine ist das Bodenblech um eine quer zum Erntegutkanal verlaufende Achse schwenkbar gegenüber dem Maschinenrahmen der Erntemaschine gelagert. Die Schwenkbarkeit des Bodenblechs ermöglicht, dass in einer geschlossenen Stellung des Bodenblechs der Erntegutkanal nach unten geschlossen ist. In einer geöffneten Stellung des Bodenblechs ist der Erntegutkanal dagegen nach unten zumindest teilweise geöffnet, so dass der Erntegutkanal, insbesondere ein darin befindlicher Schneidrotor zu Wartungs- und Reparaturzwecken zugänglich ist.

Eine besonders vorteilhafte Ausgestaltung sieht vor, dass das Bodenblech und der Tragrahmen um die gleiche Achse schwenkbar gegenüber dem Maschinenrahmen der Erntemaschine gelagert sind. Durch eine solche Lagerung ist es möglich, den Tragrahmen mit daran gehaltenem Messerträger um die gleiche Achse wie das Bodenblech zu verschwenken. Es kann vorgesehen sein, dass das Bodenblech und der Tragrahmen des Messerträgers miteinander verbindbar sind, so dass je nach Bedarf ein gemeinsames Verschwenken als eine Einheit oder ein separates Verschwenken möglich ist.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht,
- Fig. 2: eine Schneidvorrichtung einer Ballenpresse bei geschlossenem Tragrahmen in perspektivischer Ansicht,
- Fig. 3: die Schneidvorrichtung der Fig. 2 bei geöffnetem Tragrahmen in perspektivischer Ansicht,
- Fig. 4: die Schneidvorrichtung der Fig. 3, wobei der Messerträger in eine linke Position bewegt wurde,
- Fig. 5: die Schneidvorrichtung der Fig. 3, wobei der Messerträger in eine rechte Position bewegt wurde.

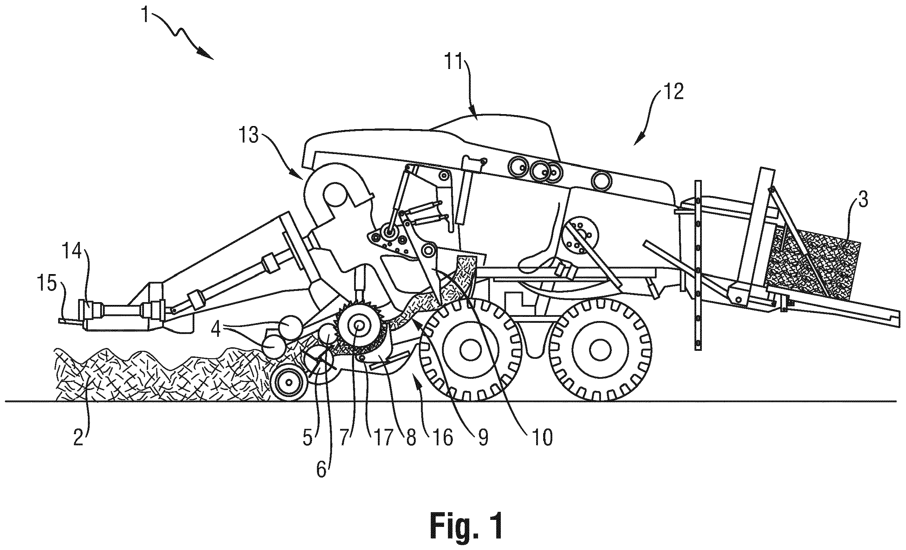

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zu einem nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine schematisch dargestellte Schneidvorrichtung 16 angeordnet. Die Schneidvorrichtung 16 weist im Wesentlichen eine Vielzahl von Messern 8 auf, die in Bezug auf den Zuführkanal 9 quer zur Förderrichtung des Ernteguts 2 nebeneinander angeordnet sind. Demzufolge ist nur ein in der Zeichnungsansicht vorderes (in Fahrtrichtung der Presse 1 gesehen linkes) Messer 8 der Schneidvorrichtung 16 zu sehen, das - wie auch die übrigen Messer 8 - um eine quer zur Gutförderrichtung verlaufende Messerachse 17 verschwenkbar ist. Jedes Messer 8 ist so zwischen einer Außerbetriebsposition, in der es nicht in den Erntegutkanal hineinragt, und einer Betriebsposition verschwenkbar, in der es in den Erntegutkanal hineinragt. Befindet sich ein Messer 8 (bzw. eine Vielzahl oder sämtliche der Messer 8) in der Betriebsposition, so wird das den Zuführkanal 9 durchströmende Erntegut 2 durch kämmende Zusammenwirkung von Rotor 7 (dessen Rotorsternen) und dem jeweiligen Messer 8 zerkleinert, insbesondere geschnitten.

Nach Passieren der Schneidvorrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertig zu stellen. Heckseitig der Ballenpresse 1 erfolgt anschließend der Ballenabwurf.

Frontseitig der Ballenpresse 1 befindet sich eine Zugdeichsel 15, mit der die Ballenpresse 1 von einem Zugfahrzeug wie einem Traktor (nicht dargestellt) gezogen und von diesem angetrieben wird. Zum Antrieb der Förder- und Verarbeitungseinrichtungen der Ballenpresse 1 dient eine mit dem Traktor koppelbare Hauptantriebswelle 14, die in ein Hauptgetriebe 13 mündet.

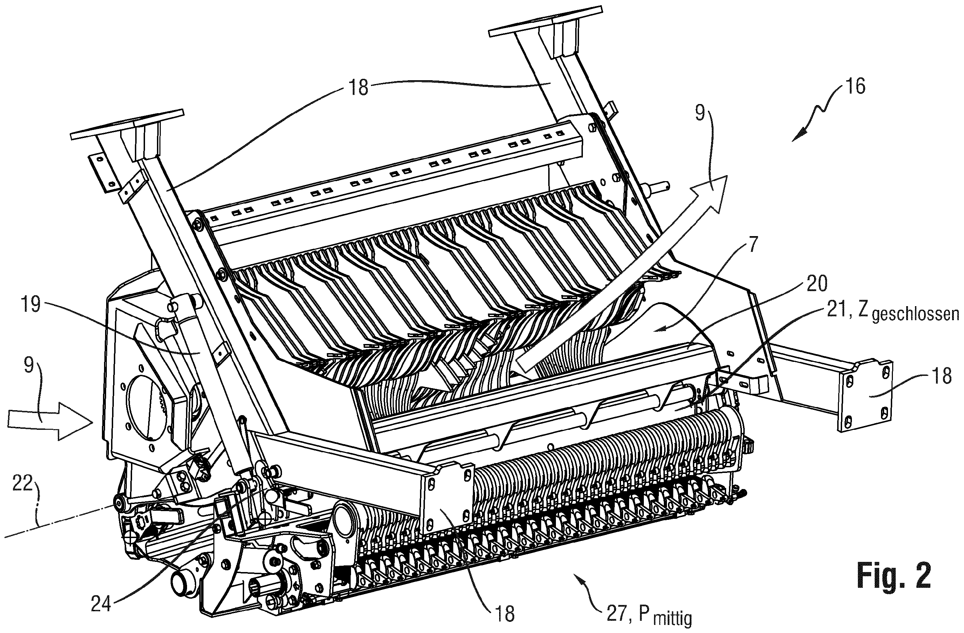

Die Fig. 2 bis 5 zeigen nun im Detail eine Schneidvorrichtung 16, die in eine Ballenpresse 1 gemäß Fig. 1 eingebaut sein kann, in verschiedenen Zuständen in perspektivischer Ansicht. Dabei zeigt zunächst Fig. 2 eine Schneidvorrichtung 16 mit geschlossenem Tragrahmen 21, d.h. in dessen geschlossenem Zustand (Z_{geschlossen}). Die Schneidvorrichtung 16 wird von einem Maschinenrahmen 18 getragen, der im gezeigten Ausführungsbeispiel beidseitig des Rotors 7 angeordnete, in einem stumpfen Winkel miteinander verschweißte Trägerelemente mit Rechteckprofil umfasst. Ein Rotor 7 mit einer Vielzahl daran befestigter Rotorsterne (nicht einzeln bezeichnet) ist drehbar gegenüber dem Maschinenrahmen 18 gelagert.

Unmittelbar unterhalb des Rotors 7 erstreckt sich ein gebogenes Bodenblech 20, das einen Erntegutkanal 9 (angedeutet durch die ein- und austretenden Pfeile 9) über dessen gesamte Breite nach unten begrenzt. Das Bodenblech 20 ist um eine quer zum Erntegutkanal 9 verlaufende Schwenkachse 22 schwenkbar gegenüber dem Maschinenrahmen 18 drehbar gelagert. In dem Bodenblech 20 sind über dessen Breite eine Vielzahl schlitzartiger Ausnehmungen ausgebildet (in Fig. 2 aufgrund des geschlossenen Zustands Z_{geschlossen} verdeckt), durch welche eine Anzahl von Messern 8 (in Fig. 2 ebenfalls verdeckt) in den Erntegutkanal 9 hineinragen kann.

Zusätzlich zum Bodenblech 20 ist ein Tragrahmen 21 um die quer zum Erntegutkanal 9 verlaufende Schwenkachse 22 schwenkbar gegenüber dem Maschinenrahmen 18 gelagert. Der Tragrahmen 21 hält einen sich darunter befindlichen Messerträger 27, an dem eine Vielzahl von Messern 8 (in Fig. 2 verdeckt) in Bezug auf den Erntegutkanal 9 in Reihe nebeneinander angeordnet sind. Aufgrund der Verschwenkbarkeit des Tragrahmens 21 um die Schwenkachse 22 ist auch der davon getragene Messerträger 27 um die Schwenkachse 22 verschwenkbar.

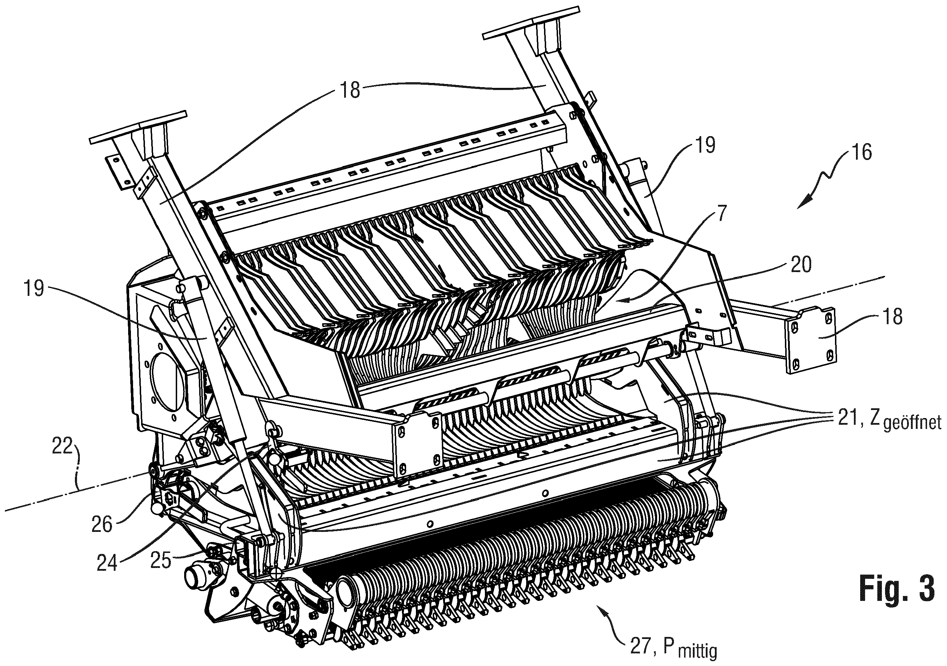

Zur Betätigung des Tragrahmens 21 dienen zwei beidseitig des Erntegutkanals 9 angeordnete hydraulische Stellzylinder 19 (in der perspektivischen Ansicht der Fig. 2 ist nur der linke Stellzylinder 19 sichtbar). Das Paar von Stellzylindern 19 wirkt zwischen dem Maschinenrahmen 18 und dem Tragrahmen 21 im Sinne einer Aktorik, um den Tragrahmen 21 aus einem in Fig. 2 dargestellten geschlossenen Zustand Z_{geschlossen}, in dem der Messerträger 27 seitlich von Seitenwänden des Erntegutkanals 9 eingeschlossen ist, in einen in Fig. 3 dargestellten geöffneten Zustand Z_{geöffnet} verschwenken zu können, in dem der Messerträger 27 in seitliche Positionen bewegbar ist.

Dementsprechend zeigt Fig. 3 die Schneidvorrichtung 16 bei geöffnetem Tragrahmen 21 (geöffneter Zustand Z_{geöffnet}) in perspektivischer Ansicht. Die Stellzylinder 19 sind im Unterschied zu Fig. 2 ausgefahren, so dass der Tragrahmen 21 mitsamt daran befestigtem Messerträger 27 gegenüber dem Erntegutkanal 9 (im Vergleich zu Fig. 2) abgesenkt ist. Das Bodenblech 20 ist befindet sich jedoch in der gleichen Position wie in Fig. 2, ist nämlich mittels eines Feststellhebels 24 gegenüber dem Maschinenrahmen 18 arretiert. In dem in Fig. 3 gezeigten geöffneten Zustand Z_{geöffnet} des Tragrahmens 21 ist demnach ein zwischen dem abgesenkten Messerträger 27 und dem Bodenblech 20 befindlicher Bereich freigegeben.

In den Fig. 2 und 3 befindet sich der Messerträger 27 jeweils in einer mittigen Position P_{mittig} bezogen auf den Erntegutkanal 9, d.h. der Messerträger 27 ist zentral zwischen den Stellzylindern 19 angeordnet. Erfindungsgemäß ist jedoch der Messerträger 27 in einer sich quer zum Erntegutkanal 9 erstreckenden Richtung linear beweglich gelagert, so dass sich dieser aus der in den Fig. 2 und 3 gezeigten mittigen Position P_{mittig} beidseitig in jeweils davon seitliche Positionen bewegen kann, in denen der Messerträger 27 jeweils zumindest zur Hälfte aus dem Erntegutkanal 9 hinausragt.

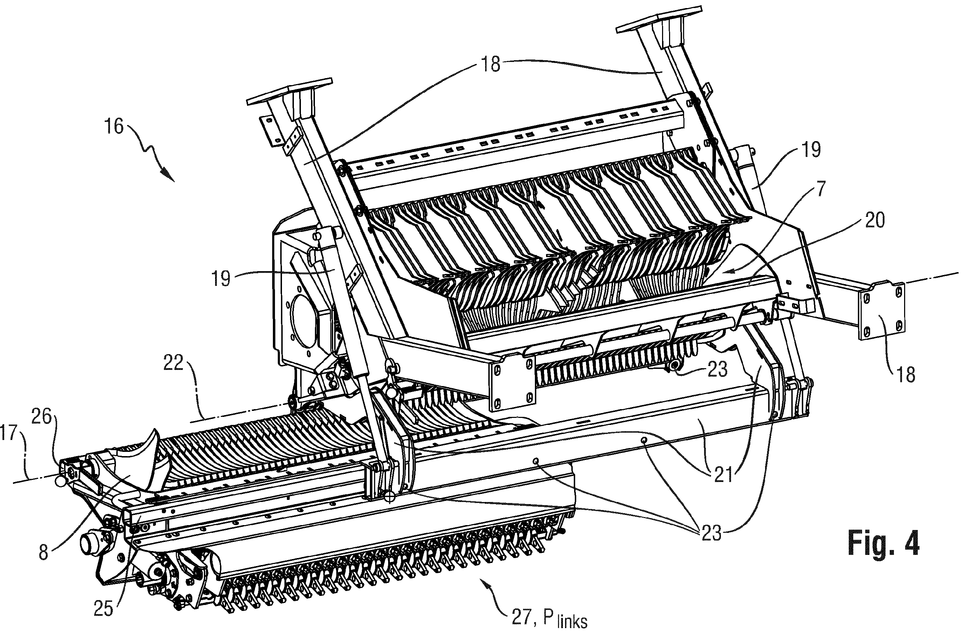

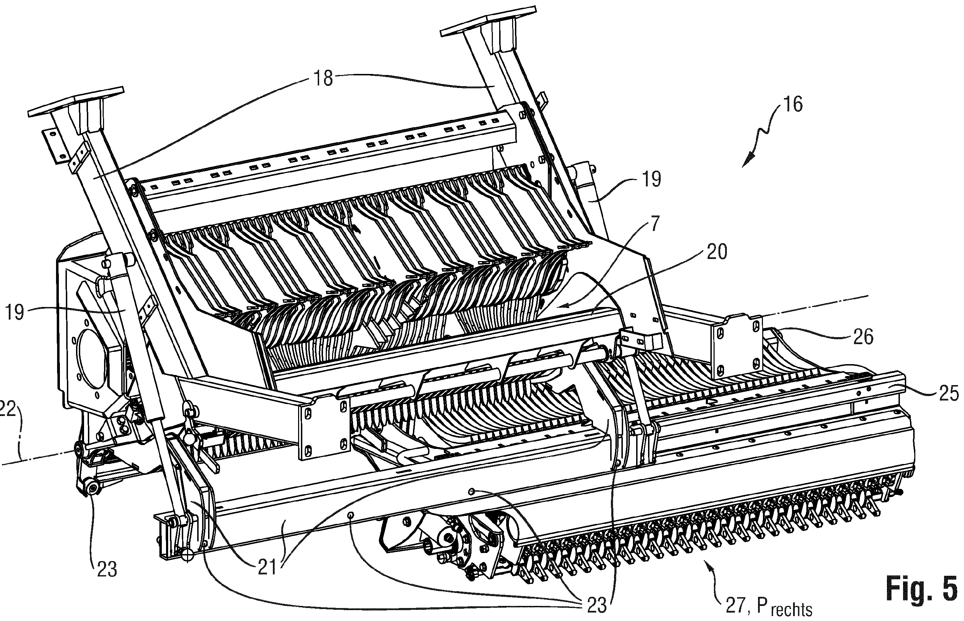

Dementsprechend zeigt Fig. 4 die Schneidvorrichtung 16, wobei der Messerträger 27 aus dem geöffneten Zustand Z_{geöffnet} der Fig. 3 in eine linke Position Pₗᵢₙₖₛ bewegt wurde, und zeigt Fig. 5 die Schneidvorrichtung 16, wobei der Messerträger 27 aus dem geöffneten Zustand Z_{geöffnet} der Fig. 3 in eine rechte Position P_{rechts} bewegt wurde.

Wie Fig. 4 und 5 zeigen, ist dazu der Messerträger 27 im Sinne einer Schublade ausgebildet, die gegenüber dem haltenden Tragrahmen 21 seitlich verschiebbar gelagert ist. Am Tragrahmen 21, der im Wesentlichen zwei seitliche Arme und zumindest eine diese verbindende Querstrebe umfasst, sind dazu mehrere über die Breite des Erntegutkanals 9 angeordnete Tragrollen 23 angeordnet. Wie in den Fig. 4 und 5 angedeutet, sind an einer hinteren Querstrebe des Tragrahmens 21 in gleichmäßigen Abständen vier Tragrollen 23 angeordnet. Der Messerträger 27, an dem eine Vielzahl von um eine Messerachse 17 schwenkbaren Messern 8 nebeneinander angeordnet ist, weist jeweils eine quer zum Erntegutkanal 9 verlaufende vordere Schiene 26 und eine quer zum Erntegutkanal 9 verlaufende hintere Schiene 25 auf. Die hintere Schiene 25 und die vordere Schiene 26 werden von den Tragrollen 23 des Tragrahmens 21 derart auf einer quer zum Erntegutkanal 9 verlaufenden Führungsbahn gehalten, dass sich der gesamte Messerträger 27 - bei geöffnetem Zustand des Tragrahmens 21 - aus der mittigen Position P_{mittig} gemäß Fig. 3 in die linke Position Pₗᵢₙₖₛ gemäß Fig. 4, oder in die rechte Position P_{rechts} gemäß Fig. 5 bewegen lässt. In beiden Positionen Pₗᵢₙₖₛ bzw. P_{rechts} ragt der Messerträger 27 jeweils zu etwa 60% seiner Breite aus dem Erntegutkanal 9 seitlich hinaus.

Durch Einnahme der beiden Positionen Pₗᵢₙₖₛ bzw. P_{rechts} lassen sich demnach sämtliche Messer 8 bequem erreichen, um diese beispielsweise auszutauschen, zu reinigen oder um sich aus sonstigen Gründen Zugang zum Messerträger 27 zu verschaffen. Aufgrund der gleichmäßigen Anordnung der vier Tragrollen 23 wird die hintere Schiene 25 auch in den seitlichen Positionen Pₗᵢₙₖₛ bzw. P_{rechts} des Messerträgers 27 von jeweils zumindest zwei der Tragrollen 23 kontaktiert. So ist auch in den voll ausgefahrenen Positionen Pₗᵢₙₖₛ bzw. P_{rechts} ein sicherer Halt des Messerträgers 27 im Tragrahmen 21 gewährleistet. Da sich die Tragrollen 23 jeweils unterhalb der vorderen bzw. hinteren Schiene 26 bzw. 25 befinden, ist zudem gewährleistet, dass durch den Schneidvorgang anfallende Partikel, die beispielsweise durch die im Bodenblech 20 ausgebildeten schlitzartigen Ausnehmungen fallen, nicht mit den linearen Führungsmitteln, insbesondere den Tragrollen 23 sowie den damit zusammenwirkenden Schienen 25, 26 in Kontakt geraten und diese verunreinigen.

**Bezugszeichenliste**

| | | | |
|---|---|---|---|
| 1 | Ballenpresse | P_{mittig} | mittige Position |
| 2 | Erntegut | Pₗᵢₙₖₛ | linke Position |
| 3 | Ballen | P_{rechts} | rechte Position |
| 4 | Niederhalterollen | | |
| 5 | Aufsammeltrommel | Z_{geschlossen} | geschlossener Zustand |
| 6 | Förderorgan | Z_{geöffnet} | geöffneter Zustand |
| 7 | Rotor | | |
| 8 | Messer | | |
| 9 | Zuführkanal | | |
| 10 | Raffer | | |
| 11 | Presskammer | | |
| 12 | Knoteinrichtung | | |
| 13 | Hauptgetriebe | | |
| 14 | Hauptantriebswelle | | |
| 15 | Zugdeichsel | | |
| 16 | Schneidvorrichtung | | |
| 17 | Messerachse | | |
| 18 | Maschinenrahmen | | |
| 19 | Stellzylinder | | |
| 20 | Bodenblech | | |
| 21 | Tragrahmen | | |
| 22 | Schwenkachse | | |
| 23 | Tragrolle | | |
| 24 | Feststell hebel | | |
| 25 | hintere Schiene | | |
| 26 | vordere Schiene | | |
| 27 | Messerträger | | |

## Patentansprüche

1. Erntemaschine, insbesondere Ballenpresse (1) oder Ladewagen, mit einer Schneidvorrichtung (16) für landwirtschaftliches Erntegut (2), wobei die Schneidvorrichtung (16) eine Anzahl von Messern (8) umfasst, die in Bezug auf einen von Erntegut (2) durchströmten Erntegutkanal (9) in Reihe nebeneinander an einem Messerträger (27) angeordnet und jeweils zwischen zumindest einer Betriebsposition und einer Außerbetriebsposition verstellbar sind, wobei der Messerträger (27) in einer sich quer zum Erntegutkanal (9) erstreckenden Richtung linear beweglich gelagert ist, **dadurch gekennzeichnet, dass** der Messerträger (27) aus einer bezogen auf den Erntegutkanal (9) mittigen Position (P_{mittig}) beidseitig in jeweils davon seitliche Positionen (P_{links,}, P_{rechts}) bewegbar ist, in denen der Messerträger (27) jeweils nur teilweise, jedoch zumindest zur Hälfte aus dem Kanal (9) hinausragt.

2. Erntemaschine nach Anspruch 1, **dadurch gekennzeichnet, dass** der Messerträger (27) von einem Tragrahmen (21) gehalten wird, der um eine quer zum Erntegutkanal (9) verlaufende Achse (22) schwenkbar gegenüber dem Maschinenrahmen (18) der Erntemaschine (1) gelagert ist.

3. Erntemaschine nach Anspruch 2, **dadurch gekennzeichnet, dass** der Tragrahmen (21) mittels einer geeigneten Aktorik, vorzugsweise mittels paarweise zwischen dem Maschinenrahmen (18) und dem Tragrahmen (21) wirkenden hydraulischen Stellzylindern (19), aus einem geschlossenen Zustand (Z_{geschlossen}), in dem der Messerträger (27) seitlich vom Erntegutkanal (9) eingeschlossen ist, in einen geöffneten Zustand (Z_{geöffnet}) verschwenkbar ist, in dem der Messerträger (27) in seitliche Positionen (P_{links,}, P_{rechts}) bewegbar ist.

4. Erntemaschine nach Anspruch 2 oder 3, **dadurch gekennzeichnet, dass** der Messerträger (27) gegenüber dem Tragrahmen (21) mittels linearer Führungsmittel schubladenartig gelagert ist.

5. Erntemaschine nach Anspruch 4, **dadurch gekennzeichnet, dass** am Messerträger (27) jeweils eine quer zum Erntegutkanal (9) verlaufende vordere Schiene (26) und eine quer zum Erntegutkanal (9) verlaufende hintere Schiene (25) angeordnet sind, die mittels am Tragrahmen (21) angeordneter Lagerelemente (23) auf einer quer zum Erntegutkanal (9) verlaufenden Führungsbahn gehalten werden.

6. Erntemaschine nach Anspruch 5, **dadurch gekennzeichnet, dass** es sich bei den Lagerelementen um mehrere über die Breite des Tragrahmens (21) angeordnete Rollen (23) handelt, wobei die vordere Schiene (26) und die hintere Schiene (25) auch in den seitlichen Positionen (P_{links,}, P_{rechts}) des Messerträger (27) auf zumindest zwei dieser Rollen (23) aufliegen.

7. Erntemaschine nach einem der Ansprüche 1 bis 6, **dadurch gekennzeichnet, dass** der Messerträger (27) in den seitlichen Positionen (P_{links,}, P_{rechts}) zu etwa 60% aus dem Erntegutkanal (9) hinausragt.

8. Erntemaschine nach einem der Ansprüche 1 bis 7, **dadurch gekennzeichnet, dass** der Schneidvorrichtung ein den Erntegutkanal (9) nach unten gegenüber dem Messerträger (27) abdeckendes Gutleitelement, insbesondere ein Bodenblech (20), zugeordnet ist, in dem eine Vielzahl schlitzartiger Ausnehmungen für die am Messerträger (27) angeordneten Messer (8) ausgebildet ist.

9. Erntemaschine nach Anspruch 8, **dadurch gekennzeichnet, dass** das Bodenblech (20) um eine quer zum Erntegutkanal (9) verlaufende Achse (22) schwenkbar gegenüber dem Maschinenrahmen (18) der Erntemaschine (1) gelagert ist.

10. Erntemaschine nach Anspruch 7 oder 8, **dadurch gekennzeichnet, dass** das Bodenblech (20) und der Tragrahmen (21) um die gleiche Achse (22) schwenkbar gegenüber dem Maschinenrahmen (18) der Erntemaschine (1) gelagert sind.

## Claims

1. A harvester, in particularly a bale press (1) or a loading vehicle, having a cutting device (16) for agricultural crop material (2), wherein the cutting device (16) includes a number of blades (8) which are arranged on a blade carrier (27) in series in mutually juxtaposed relationship in relation to a crop material passage (9) through which crop material (2) passes and which are respectively displaceable between at least an operative position and an inoperative position, wherein the blade carrier (27) is mounted linearly moveably in a direction extending transversely relative to the crop material passage (9),
**characterised in that** the blade carrier (27) is moveable from a central position (P_{mittig}) in relation to the crop material passage (9) at both sides into respective positions (Pₗᵢₙₖₛ, P_{rechts}) laterally thereof, in which the blade carrier (27) respectively projects only partly but at least as far as half out of the passage (9).

2. A harvester according to claim 1 **characterised in that** the blade carrier (27) is held by a carrier frame (21) which is mounted pivotably with respect to the machine frame (18) of the harvester (1) about an axis (22) extending transversely relative to the crop material passage (9).

3. A harvester according to claim 2 **characterised in that** the carrier frame (21) is moveable by means of a suitable actuator means, preferably by means of hydraulic actuating cylinders (19) acting pair-wise between the machine frame (18) and the carrier frame (21), from a closed condition (Z_{geschlossen}) in which the blade carrier (27) is laterally enclosed by the crop material passage (9) into an opened condition (Z_{geöffnet}) in which the blade carrier (27) is moveable into lateral positions (Pₗᵢₙₖₛ, P_{rechts}).

4. A harvester according to claim 2 or claim 3 **characterised in that** the blade carrier (27) is mounted drawer-like with respect to the carrier frame (21) by means of linear guide means.

5. A harvester according to claim 4 **characterised in that** arranged on the blade carrier (27) are a front rail (26) extending transversely relative to the crop material passage (9) and a rear rail (25) extending transversely relative to the crop material passage (9), which rails are held by means of mounting elements (23) arranged on the carrier frame (21) on a guide path extending transversely relative to the crop material passage (9).

6. A harvester according to claim 5 **characterised in that** the mounting elements are a plurality of rollers (23) arranged over the width of the carrier frame (21), wherein the front rail (26) and the rear rail (25) rest on at least two of those rollers (23) even in the lateral positions (Pₗᵢₙₖₛ, P_{rechts}) of the blade carrier (27).

7. A harvester according to one of claims 1 to 6 **characterised in that** the blade carrier (27) projects by about 60% out of the crop material passage (9) in the lateral positions (Pₗᵢₙₖₛ, P_{rechts}).

8. A harvester according to one of claims 1 to 7 **characterised in that** associated with the cutting device is a material guide element, in particular a bottom plate (20), which covers the crop material passage (9) downwardly in relation to the blade carrier (27) and in which is provided a plurality of slit-like openings for the blades (8) arranged on the blade carrier (27).

9. A harvester according to claim 8 **characterised in that** the bottom plate (20) is mounted pivotably with respect to the machine frame (18) of the harvester (1) about an axis (22) extending transversely relative to the crop material passage (9).

10. A harvester according to claim 7 or claim 8 **characterised in that** the bottom plate (20) and the carrier frame (21) are mounted pivotably with respect to the machine frame (18) of the harvester (1) about the same axis (22).

## Revendications

1. Machine de récolte, en particulier presse à balles (1) ou remorque autochargeuse, comprenant un dispositif de coupe (16) pour du produit agricole de récolte (2), le dispositif de coupe (16) comportant une pluralité de couteaux (8) qui, par rapport à un canal de produit de récolte (9) traversé par du produit de récolte (2), sont disposés en rang côte à côte sur un porte-couteaux (27) et sont chacun déplaçables entre au moins une position de service et une position hors service, le porte-couteaux (27) étant monté linéairement mobile dans une direction s'étendant transversalement au canal de produit de récolte (9), **caractérisée en ce que** le porte-couteaux (27) est déplaçable, des deux côtés, depuis une position centrale (P_{mittig}) par rapport au canal de produit de récolte (9) vers des positions respectivement latérales (Pₗᵢₙₖₛ, P_{rechts}) dans lesquelles le porte-couteaux (27) ne dépasse que partiellement, mais au moins de moitié, du canal (9).

2. Machine de récolte selon la revendication 1, **caractérisée en ce que** le porte-couteaux (27) est maintenu par un bâti porteur (21) qui est monté pivotant par rapport au bâti de machine (18) de la machine de récolte (1) selon un axe (22) s'étendant transversalement au canal de produit de récolte (9).

3. Machine de récolte selon la revendication 2, **caractérisée en ce que**, au moyen d'un ensemble actionneur approprié, de préférence au moyen de vérins hydrauliques de réglage (19) agissant par paires entre le bâti de machine (18) et le bâti porteur (21), le bâti porteur (21) est déplaçable depuis une position fermée (Z_{geschlossen}), dans laquelle le porte-couteaux (27) est bordé latéralement par le canal de produit de récolte (9), vers un état ouvert (Z_{geöffnet}), dans lequel le porte-couteaux (27) est déplaçable vers des positions latérales (Pₗᵢₙₖₛ, P_{rechts}).

4. Machine de récolte selon la revendication 2 ou 3, **caractérisée en ce que**, au moyen de moyens de guidage linéaire, le porte-couteaux (27) est monté à la façon d'un tiroir par rapport au bâti porteur (21).

5. Machine de récolte selon la revendication 4, **caractérisée en ce que** sur le porte-couteaux (27) sont disposés un rail avant (26) s'étendant transversalement au canal de produit de récolte (9) et un rail arrière (25) s'étendant transversalement au canal de produit de récolte (9), lesquels rails sont maintenus sur une glissière de guidage s'étendant transversalement au canal de produit de récolte (9) au moyen d'éléments d'appui (23) disposés sur le bâti porteur (21).

6. Machine de récolte selon la revendication 5, **caractérisée en ce que** les éléments d'appui sont constitués par plusieurs galets (23) disposés sur la largeur du bâti porteur (21), le rail avant (26) et le rail arrière (25) reposant sur au moins deux de ces galets (23), même dans les positions latérales (Pₗᵢₙₖₛ, P_{rechts}) du porte-couteaux (27).

7. Machine de récolte selon une des revendications 1 à 6, **caractérisée en ce que**, dans les positions latérales (Pₗᵢₙₖₛ, P_{rechts}), le porte-couteaux (27) dépasse du canal de produit de récolte (9) d'environ 60 %.

8. Machine de récolte selon une des revendications 1 à 7, **caractérisée en ce qu'**au dispositif de coupe est associé un élément de guidage de produit, en particulier une tôle de fond (20), qui ferme le canal de produit de récolte (9) vers le bas par rapport au porte-couteaux (27) et dans lequel est ménagée une pluralité d'ouvertures en forme de fentes pour les couteaux (8) disposés sur le porte-couteaux (27).

9. Machine de récolte selon la revendication 8, **caractérisée en ce que** la tôle de fond (20) est montée pivotante par rapport au bâti de machine (18) de la machine de récolte (1) selon un axe (22) s'étendant transversalement au canal de produit de récolte (9).

10. Machine de récolte selon la revendication 7 ou 8, **caractérisée en ce que** la tôle de fond (20) et le bâti porteur (21) sont montés pivotants par rapport au bâti de machine (18) de la machine de récolte (1) selon le même axe (22).
